# EUROPÄISCHE PATENTANMELDUNG

(11) **EP 1 518 840 A2**
(43) Veröffentlichungstag der Anmeldung: **30.03.2005**
(21) Anmeldenummer: 04450178.1
(22) Anmeldetag: 21.09.2004
(51) Int. Cl.: C04B 28/02

(54) **Fliessfähige selbsterhärtende Mischung mit Puzzolanen und/oder zumindest einem hydraulischen Bindemittel sowie Verwendung derselben zum Verfüllen von natürlichen und/oder künstlichen Hohlraümen**

(30) Priorität: 23.09.2003 AT 66492003
(71) Anmelder: Schotter- und Betonwerk Karl SCHWARZL Betriebsgesellschaft m.b.H., 8141 Unterpremstätten (AT)
(72) Erfinder: Beletz, Oskar, 8054 Graz (AT)
(74) Vertreter: Widtmann, Georg

(57) **Zusammenfassung**

Fließfähige selbsterhärtende Mischung mit einem Füllstoff, insbesondere Zuschlag, von 10,0 Vol.-% bis 90,0 Vol.-%, insbesondere von 55,0 Vol.-% bis 80,0 Vol.-%, in einer Korngröße von 0 mm bis 30 mm, insbesondere 0 mm bis 8 mm, Puzzolanen und/oder zumindest einem hydraulischen Bindemittel, insbesondere Portlandzement, Wasser, mit einem W/B-Wert von 1,0 bis 5,0, Luftporen, insbesondere bis zu 6 Vol.-%, Zusatzmittel, z. B. Fließmittel, mit einer Dichte über 1,7, insbesondere über 1,9, und einer Druckfestigkeit nach ÖNORM B3303 nach 28 Tagen von 0,2 N/mm² bis 4,9 N/mm², wobei das Zusatzmittel zumindest ein Mittel für die, insbesondere zur Erhöhung der, Thixotropie von 0,05 Vol.-% bis 15,0 Vol.-%, insbesondere von 0,1 Vol.-% bis 2,0 Vol.-%, bezogen auf die Mischung, aufweist, und unter fließendem Grundwasser ohne, z. B. mechanischen, Mischvorgang bereits eine Formbeständigkeit vor dem Erhärten aufweist, und die erhärtende Mischung eine Druckfestigkeit von 0,2 N/mm² bis 4,9 N/mm² nach 28-tägiger Lagerung unter Wasser bei Raumtemperatur aufweist.

## Beschreibung

Die Erfindung bezieht sich auf eine fließfähige selbsterhärtende Mischung mit einem Füllstoff, Puzzolanen und/oder zumindest einem hydraulischen Bindemittel mit einer Dichte über 1,7, insbesondere über 1,9, und auf die Verwendung einer derartigen Mischung zum Verfüllen von flüssiges Wasser und/oder Schlämme aufweisenden natürlichen und/oder künstlichen Hohlräumen.

Unterirdische Hohlräume, seien sie abgeschlossen oder zumindest einseitig, z. B. nach oben, offen, stellen, insbesondere wenn sie nicht mehr gewartet werden, eine erhebliche Gefahr für die Umwelt dar. Bei künstlichen Hohlräumen, wie sie beispielsweise auch unterirdisch unter Wohngebieten vorliegen können, besteht die Gefahr, dass beispielsweise durch Regenfälle, leichte Erdbeben oder dergleichen die darüber befindliche Schicht, gegebenenfalls mit den darauf befindlichen Gebäuden, in den Hohlraum absinken.

Es ist bekannt, derartige Hohlräume mit Beton zu füllen, wobei der Beton vor Ort und/oder in einem Transportbetonwerk gefertigt wird. Hierzu muss vor Ort ein Lager für Zuschlagsstoffe und Bindemittel sowie eine Mischanlage vorgesehen sein, wenn kein Transportbeton verwendet wird. Nach einer groben Verfüllung der Hohlräume und nach Erhärten des Betons muss der üblicherweise verbleibende Hohlraum zwischen Beton und First erneut mit einer Mischung verpresst werden, um ein Absinken der Oberfläche in Richtung zu dem verfestigten Beton zu verhindern. Weiters besteht der Nachteil, dass bei einer Wiederinbetriebnahme, beispielsweise eines Kohlenbergwerkes oder Künette, die Beseitigung des Betons nur mit großem Aufwand durchgeführt werden kann. Ein Einbau von Tübbingen muss selbstverständlich vorgesehen sein, um ein Absinken nach Entfernung des Betons zu vermeiden.

Eine Alternative dazu ist die Verfüllung mit Steinmehl-Bindemittel-Suspensionen. Die Nachteile sind geringe und daher unwirtschaftliche Stundenleistungen beim Verfüllen, geringe Beständigkeit gegen Abrieb in fließendem Grundwasser, geringer Dichteunterschied gegenüber Schlämmen und damit schlechte Unterwanderung und bei einer späteren Trockenlegung ein Abfall der Festigkeit und damit Belastbarkeit.

Aus der AT 374 163 B wird eine gießfähige Mischung zum Verfüllen von Künetten, Gräben od. dgl. bekannt. Diese Mischung weist nach dem Erhärten eine Druckfestigkeit von 0,2 N/mm² bis 4,9 N/mm² auf. Eine derartige Druckfestigkeit erlaubt, dass die verfüllten Hohlräume mit einfachen Mitteln wieder geöffnet werden können, wobei gleichzeitig eine Zerstörung von Rohrleitungen, Kabeln oder ursprünglichen Wandungen der Hohlräume leicht vermieden werden kann. Derartige Mischungen weisen jedoch den Nachteil auf, dass sie während der Abbindzeit, die bei 3 bis 4 Stunden beträgt, ein Entmischen aufweisen - also die schwereren Füllstoffe sinken nach unten ab - und eine Abgabe der Puzzolane und/oder hydraulischen Bindemittel an z. B. übergeschichteten Wasser erfolgt, so dass die Beständigkeit gegenüber überfließendem Wasser nicht gegeben ist und erneut ein Verpressen der Firstbereiche, so fließendes Wasser vorliegt, erforderlich ist.

Der vorliegenden Erfindung ist zum Ziel gesetzt, eine fließfähige selbsterhärtende Mischung und Verwendung derselben zu schaffen, die auch unter wasserhältigen Mischungen, beispielsweise Schlämmen, beständig ist, und dieselben unterschichten kann, und die auch unter strömendem Grundwasser typischerweise in etwa 2 m pro Tag ihre Formbeständigkeit unter Wasser aufweist, wobei die Druckfestigkeit nach 28-tägiger Lagerung unter Wasser ausreichend ist, um darüber beispielsweise Verkehrsflächen aber auch stationäre Belastungen, wie Häuser, ohne Einsinken der erhärteten Mischung verwirklicht werden können.

Die Erfindung geht von einem Stand der Technik aus, wie durch die AT 374 163 B gegeben ist.

Die erfindungsgemäße fließfähige selbsterhärtende Mischung mit einem Füllstoff, insbesondere Zuschlag, von 10,0 Vol.-% bis 90,0 Vol.-%, insbesondere von 55,0 Vol.-% bis 80,0 Vol.-%, in einer Korngröße von 0 mm bis 30 mm, insbesondere 0 mm bis 8 mm, Puzzolanen und/oder zumindest einem hydraulischen Bindemittel, insbesondere Portlandzement, Wasser, mit einem W/B-Wert von 1,0 bis 5,0, Luftporen, insbesondere bis zu 6 Vol.-%, Zusatzmittel, z. B. Fließmittel, mit einer Dichte über 1,7, insbesondere über 1,9, und einer Druckfestigkeit nach ÖNORM B3303 nach 28 Tagen von 0,2 N/mm² bis 4,9 N/mm², besteht im Wesentlichen darin, dass das Zusatzmittel zumindest ein Mittel für die, insbesondere zur Erhöhung der, Thixotropie von 0,05 Vol.-% bis 15,0 Vol.-%, insbesondere von 0,1 Vol.-% bis 2,0 Vol.-%, bezogen auf die Mischung, und gegebenenfalls Polypropylenfasern, aufweist, und unter fließendem Grundwasser ohne, z. B. mechanischen, Mischvorgang bereits eine Formbeständigkeit vor dem Erhärten aufweist, und die erhärtende Mischung eine Druckfestigkeit von 0,2 N/mm²bis 4,9 N/mm² 28 Tage nach Beginn der Erhärtung und gleichzeitiger 28-tägiger Lagerung unter Wasser bei Raumtemperatur aufweist.

Die fließfähige selbsterhärtende Mischung stellt im Wesentlichen einen Frischbeton mit besonders geringem Gehalt an Puzzolanen und/oder hydraulischen Bindemitteln dar und definiert weder einen Leichtbeton noch einen Unterwasserbeton. Die Druckfestigkeit der erhärteten Mischung ist insbesondere zum Abbau derselben in wieder zu öffnenden Hohlräumen von besonderer Bedeutung, da bei höherer Festigkeit als 4,9 N/mm² eine Zerstörung der Installationen befürchtet werden muss. Durch den W/B-Wert wird neben der Festigkeit auch die Porosität, also Aufnahmefähigkeit, für Flüssigkeiten definiert. Die Grenzen der Korngrößen geben auch die Fließfähigkeit der selbsterhärtenden Mischung an, da, je größer die Korngröße ist, die Fließfähigkeit sich verschlechtert. Um eine Homogenität der in die Hohlräume eingebrachten Mischungen zu erhöhen, weist die fließfähige Mischung zumindest ein Zusatzmittel für die Thixotropie und gegebenenfalls Polypropylenfasern auf, so dass die schwereren Füllstoffe, insbesondere Zuschlagsstoffe, nach der Einbringung in den Hohlraum, beispielsweise über Betonpumpen od. dgl., die Fließfähigkeit sich wieder verringert und eine Entmischung im Wesentlichen verringert, insbesondere verhindert, wird. Wie bekannt, weisen selbsterhärtende Frischbetonmischungen den Beginn einer Erhärtung nach etwa 2 bis 3 und mehr Stunden auf. In diesem Zeitraum erfolgt eine wesentliche Absenkung der Füllstoffe, so dass eine Anreicherung der Puzzolane und/oder hydraulischen Bindemittel unter Umständen Blutwasser an der Oberfläche erfolgt, wodurch ein Abtrag, z. B. durch strömendes Grundwasser und/oder Wasser, derselben erleichtert wird.

Obwohl Grundwässer eine relativ niedrige Strömungsgeschwindigkeit, z. B. von 0,5 m/Tag bis 10 m/Tag, aufweisen, bewirkt eine derartige Strömung bei bekannten Mischungen eine Auswaschung der latenthydraulischen und hydraulischen Bindemittel, so dass die Festigkeit herabgesetzt wird, wobei gleichzeitig auch Füllstoffe abgetragen werden können, so dass ein Verpressen zwischen der erhärteten Mischung und dem First ebenfalls erforderlich werden kann.

Die Festigkeit der erhärteten Mischung, da dieselbe nicht in Luft, sondern unter Wasser und/oder einer wässrigen Suspension vorliegt, wird nach Lagerung unter Wasser bestimmt, wobei dieselbe bei Lagerung unter Wasser wesentlich geringer ist als bei Lagerung in Luft.

Weist das Mittel für die Thixotropie Polysaccharide, insbesondere Guaran, auf bzw. besteht das Mittel aus denselben, so können Naturstoffe verwendet werden, die einerseits besonders wirksam sein können und andererseits eine Verunreinigung von Grundwasserströmen besonders gering halten kann.

Weist das Mittel für die Thixotropie Gelatine in feinteiliger Form auf oder besteht daraus, so wird neben der Wirksamkeit für die Thixotropie auch ein besonders unbedenkliches Mittel eingesetzt, da dasselbe in der Lebensmittelindustrie zum Einsatz kommt.

Weist das Mittel für die Thixotropie Cellulosether und/oder modifizierte Celluloseether, insbesondere Methylcellulose mit Polycarboxylate als Fließmittel, auf oder besteht aus demselben, so kommen bewährte Mittel der Betontechnologie zum Einsatz, so dass die Mischung die erwünschte Fließfähigkeit und Thixotropie und auch die erforderliche Druckfestigkeit nach 28-tägiger Lagerung unter Wasser aufweisen kann.

Das Mittel für die Thixotropie kann Quelltone, insbesondere Bentonite, aufweisen oder daraus bestehen. Quelltone werden vielfach in der Bauindustrie eingesetzt und sind auch bezüglich der Abgabe an Grundwasserströme unbedenklich.

Weist das Mittel für die Thixotropie Polycarboxylate auf, so wird die Fließfähigkeit verbessert und die Thixotropie besonders gut gefördert.

Liegen in der Mischung Zusatzmittel von 0,05 Vol.-% bis 15,0 Vol.-% vor, so können die Eigenschaften der frischen und erstarrten Mischung in weiten Grenzen modifiziert werden.

Die Erfindung besteht weiters in der Verwendung einer fließfähigen selbsterhärtenden Mischung mit einem Füllstoff, insbesondere Zuschlag, von 10,0 Vol.-% bis 90,0 Vol.-%, insbesondere von 55,0 Vol.-% bis 80,0 Vol.-%, in einer Korngröße von 0 mm bis 30 mm, insbesondere 0 mm bis 8 mm, Puzzolanen und/oder zumindest einem hydraulischen Bindemittel, insbesondere Portlandzement, Wasser, mit einem W/B-Wert von 1,0 bis 5,0, Luftporen, insbesondere bis zu 6 Vol.-%, Zusatzmittel, z. B. Fließmittel, mit einer Dichte über 1,7, insbesondere über 1,9, und einer Druckfestigkeit nach ÖNORM B3303 nach 28 Tagen Lagerung von 0,2 N/mm²bis 4,9 N/mm², wobei das Zusatzmittel zumindest ein Mittel für die, insbesondere zur Erhöhung der, Thixotropie von 0,05 Vol.-% bis 15,0 Vol.-%, insbesondere von 0,1 Vol.-% bis 2,0 Vol.-%, bezogen auf die Mischung, und gegebenenfalls Polypropylenfasern, aufweist, und unter fließendem Grundwasser ohne, z. B. mechanischen, Mischvorgang bereits im Wesentlichen eine Formbeständigkeit vor dem Erhärten aufweist, und die erhärtende Mischung eine Druckfestigkeit von 0,2 N/mm² bis 4,9 N/mm² 28 Tage nach Beginn der Erhärtung und gleichzeitiger 28-tägiger Lagerung unter Wasser bei Raumtemperatur aufweist zum Verfüllen von flüssiges Wasser und/oder wässrige Schlämme aufweisenden natürlichen und/oder künstlichen Hohlräumen. Durch das/die Mittel für die Thixotropie kann sicher gestellt werden, dass die erfindungsgemäße Mischung mit Vorrichtungen der Transportbetonindustrie, also Fahrmischer, Betonpumpen u. dgl. vor Ort ohne Entmischungen Wasser und Schlämme verdrängend eingebracht werden können und die Mischung extern zusammen gestellt und angepasst werden kann, wobei der Mischvorgang sowohl extern als auch in den Transportfahrzeugen durchgeführt werden kann. Obwohl die Geschwindigkeiten vom Grundwasser gering sind, kann durch dieselben eine Auswaschung der noch nicht erhärteten Mischung bedingen, wodurch die Festigkeit der erhärteten Mischung zumindest an der Oberfläche, die mit dem fließenden Grundwasser in Kontakt steht, herab gesetzt wird, und ein Abtrag der eingebrachten Mischung stattfinden kann.

Aufgrund der Formbeständigkeit und des guten Zusammenhalts der erfindungsgemäßen Mischung eignet sich dieselbe besonders zur Abschottung von flüssiges Wasser und/oder wässrige Schlämme aufweisenden natürlichen und/oder künstlichen Hohlräumen, wobei auch bei steifplastischer Mischung eine Betonpumpe eingesetzt werden kann.

Werden zum Mischen und/oder zum Transport der erfindungsgemäßen Mischung Geräte der Transportbetonindustrie, z. B. Transportbetonmischanlagen, Fahrmischer, Betonpumpen, eingesetzt, so kann der Mischvorgang, z. B. bereits während der Fahrt, zum Einsatzort durchgeführt werden.

Im Folgenden wird die Erfindung anhand der Beispiele und Vergleichsbeispiele näher erläutert.

### Beispiel 1:

Es wurde eine Mischung von Portlandzement 2,1 Vol.-% und Puzzolanen, und zwar Hochofenschlacke, 5,0 Vol.-%, Quarz mit einer Korngröße 0 mm bis 8 mm 59,0 Vol.-%, Wasser 28,0 Vol.-%, als Fließmittel ein Polycarboxylat 0,1 Vol.-%, Methylcellulose 0,2 Vol.-%, Polypropylenfasern 0,2 Vol.-% mit einer Länge von 10 mm und einem Durchmesser von 17 µm angefertigt.

Das Frischrohgewicht betrug 2.074 kg/m³ und der Luftporengehalt lag bei 5,0 Vol.-%. Zur Konsistenz ist auszuführen, dass das Ausbreitmaß gemäß ÖNORM B3303 nach 10 Minuten 73 cm und nach 60 Minuten 68 cm betragen hat. Das Fließmaß gemäß SCC Richtlinie des Österreichischen Betonvereins betrug nach 10 Minuten 59 cm und nach 60 Minuten 45 cm. Die Druckfestigkeit betrug 4,9 N/mm², geprüft an einem Probekörper mit 100 mm Durchmesser und Höhe, nach 28 Tagen Lagerung unter Wasser bei Raumtemperatur.

Die frische Mischung wurde in einen wassergefüllten, horizontalen Strömungskanal mit 30,0 cm Breite und 30,0 cm Höhe eingebracht. Danach wurde die Strömungsgeschwindigkeit des darüber fließenden Wassers auf 10 m/24 Stunden eingestellt. Die Füllhöhe betrug 15,0 cm. Nach 24 Stunden war kein Abtrag an der Oberfläche erkennbar.

### Vergleichsbeispiel 2:

Es wurde analog zu Beispiel 1 verfahren, wobei die Mischung keine Methylcellulose und keine Polypropylenfasern enthalten hat.

Das Frischrohgewicht betrug 2.093 kg/m³ und der Luftporengehalt lag bei 3,6 Vol.-%. Zur Konsistenz ist auszuführen, dass das Ausbreitmaß gemäß ÖNORM B3303 nach 10 Minuten 75 cm und nach 60 Minuten 70 cm betragen hat. Das Fließmaß gemäß SCC Richtlinie des Österreichischen Betonvereins betrug nach 10 Minuten 63 cm und nach 60 Minuten 58 cm Die Druckfestigkeit betrug 4,5 N/mm², geprüft an einem Probekörper mit 100 mm Durchmesser und Höhe, nach 28 Tagen Lagerung unter Wasser bei Raumtemperatur.

Die Mischung wurde analog zu Beispiel 1 in den Strömungskanal eingebracht und denselben Bedingungen unterworfen. Nach 24 Stunden Lagerung im Strömungskanal waren 3 % der Höhe beschädigt.

### Beispiel 3:

Es wurde eine Mischung von Portlandzement 3,2 Vol.-% und Puzzolanen, und zwar latenthydraulische Flugasche, 6,3 Vol.-%, Kiessand mit einer Korngröße 0 mm bis 8 mm 55,0 Vol.-%, Wasser 30,0 Vol.-%, als Fließmittel Polycarboxylate 0,15 Vol.-%, Guarkernmehl mit einem Gehalt von 75,0 Vol.-% an Guaran 0,4 Vol.-%, Polypropylenfasern 0,2 Vol.-% mit einer Länge von 10 mm und einem Durchmesser von 17 µm angefertigt.

Das Frischrohgewicht betrug 2.076 kg/m³ und der Luftporengehalt lag bei 5,2 Vol.-%. Zur Konsistenz ist auszuführen, dass das Ausbreitmaß gemäß ÖNORM B3303 nach 10 Minuten 72 cm und nach 60 Minuten 65 cm betragen hat. Das Fließmaß gemäß Beispiel 1 betrug nach 10 Minuten 60 cm und nach 60 Minuten 40 cm. Die Druckfestigkeit betrug 3,0 N/mm², geprüft an einem Probekörper mit 100 mm Durchmesser und Höhe, nach 28 Tagen Lagerung unter Wasser bei Raumtemperatur.

Die Mischung wurde in einen Strömungskanal gemäß Beispiel 1 eingebracht. Nach 24 Stunden war kein Abtrag an der Oberfläche erkennbar.

### Vergleichsbeispiel 4:

Es wurde analog zu Beispiel 3 verfahren, wobei die Mischung kein Guarkernmehl und keine Polypropylenfasern enthalten hat.

Das Frischrohgewicht betrug 2.100 kg/m³ und der Luftporengehalt lag bei 3,3 Vol.-%. Zur Konsistenz ist auszuführen, dass das Ausbreitmaß gemäß ÖNORM B3303 nach 10 Minuten 76 cm und nach 60 Minuten 70 cm betragen hat. Das Fließmaß gemäß Beispiel 1 betrug nach 10 Minuten 64 cm und nach 60 Minuten 58 cm. Die Druckfestigkeit betrug 4,7 N/mm², geprüft an einem Probekörper mit 100 mm Durchmesser und Höhe, nach 28 Tagen Lagerung unter Wasser bei Raumtemperatur.

Die Mischung wurde analog zu Beispiel 1 in den Strömungskanal eingebracht und denselben Bedingungen unterworfen. Nach 24 Stunden Lagerung im Strömungskanal waren 4 % der Höhe beschädigt.

### Beispiel 5:

Es wurde eine Mischung von Portlandzement mit 5,0 Vol.-% und Flugasche, die latenthydraulisch war, von 6,3 Vol.-% mit 56,0 Vol.-% eines natürlichen Kiessandes in einer Korngröße von 0 mm bis 16 mm, 28,0 Vol.-% Wasser, 0,2 Vol.-% als Fließmittel Polycarboxylate und 0,4 Vol.-% Guarkernmehl mit einem Gehalt von 75,0 Vol.-% an Guar gemischt.

Das Frischrohgewicht betrug 2.106 kg/m³ und der Luftporengehalt lag bei 3,0 Vol.-%. Zur Konsistenz ist auszuführen, dass das Ausbreitmaß gemäß ÖNORM B3303 nach 10 Minuten 73 cm und nach 60 Minuten 66 cm betragen hat. Das Fließmaß gemäß Beispiel 1 betrug nach 10 Minuten 59 cm und nach 60 Minuten 40 cm. Die Druckfestigkeit betrug 3,3 N/mm², geprüft an einem Probekörper mit 100 mm Durchmesser und Höhe, nach 28 Tagen Lagerung unter Wasser bei Raumtemperatur.

Die Mischung wurde analog zu Beispiel 1 in den Strömungskanal eingebracht und denselben Bedingungen unterworfen. Nach 24 Stunden Lagerung im Strömungskanal waren nur geringste Spuren eines Abtrags an der Oberfläche erkennbar.

### Vergleichsbeispiel 6:

Es wurde analog Beispiel 5 verfahren, wobei die Mischung kein Guarkernmehl enthalten hat.

Das Frischrohgewicht betrug 2.092 kg/m³ und der Luftporengehalt lag bei 3,3 Vol.-%. Zur Konsistenz ist anzuführen, dass das Ausbreitmaß gemäß ÖNORM B3303 nach 10 Minuten 78 cm und nach 60 Minuten 71 cm betragen hat. Das Fließmaß gemäß Beispiel 1 betrug nach 10 Minuten 63 cm und nach 60 Minuten 56 cm. Die Druckfestigkeit betrug 3,8 N/mm², geprüft an einem Probekörper mit 100 mm Durchmesser und Höhe, nach 28-tägiger Lagerung unter Wasser bei Raumtemperatur.

Die Mischung wurde analog zu Beispiel 1 in den Strömungskanal eingebracht und denselben Bedingungen unterworfen. Nach 24 Stunden Lagerung im Strömungskanal waren 5 % der Höhe beschädigt.

### Beispiel 7:

Es wurde eine Mischung von Portlandzement 1,3 Vol.-% und 1,4 Vol.-%, nicht hydraulisch wirkende Flugasche mit 12,2 Vol.-%, Brechsand mit einer Korngröße bis 2 mm, 29,6 Vol.-% Wasser, 0,1 Vol.-% eines Fließmittels, und zwar auf Naphtalein-Melamin-Basis, und 1,5 Vol.-% Bentonit angefertigt.

Das Frischrohgewicht betrug 1.712 kg/m³ und der Luftporengehalt lag bei 3,0 Vol.-%. Zur Konsistenz ist auszuführen, dass das Ausbreitmaß gemäß ÖNORM B3303 nach 10 Minuten 73 cm und nach 60 Minuten 68 cm betragen hat. Das Fließmaß gemäß Beispiel 1 betrug nach 10 Minuten 59 cm und nach 60 Minuten 45 cm. Die Druckfestigkeit betrug 2,5 N/mm², geprüft an einem Probekörper mit 100 mm Durchmesser und Höhe, nach 28 Tagen Lagerung unter Wasser bei Raumtemperatur.

Die Mischung wurde analog zu Beispiel 1 in den Strömungskanal eingebracht und denselben Bedingungen unterworfen. Nach 24 Stunden Lagerung im Strömungskanal war geringer als 1 % der Höhe beschädigt.

### Vergleichsbeispiel 8:

Es wurde analog Beispiel 7 verfahren, wobei die Mischung kein Bentonit enthalten hat.

Das Frischrohgewicht betrug 1.741 kg/m³ und der Luftporengehalt lag bei 3,2 Vol.-%. Zur Konsistenz ist anzuführen, dass das Ausbreitmaß gemäß ÖNORM B3303 nach 10 Minuten 73 cm und nach 60 Minuten 68 cm betragen hat. Das Fließmaß gemäß Beispiel 1 betrug nach 10 Minuten 62 cm und nach 60 Minuten 57 cm. Die Druckfestigkeit betrug 3,2 N/mm², geprüft an einem Probekörper mit 100 mm Durchmesser und Höhe, nach 28-tägiger Lagerung unter Wasser bei Raumtemperatur.

Die Mischung wurde analog zu Beispiel 1 in den Strömungskanal eingebracht und denselben Bedingungen unterworfen. Nach 24 Stunden Lagerung im Strömungskanal waren 8 % der Höhe beschädigt.

### Beispiel 9:

Es wurde eine Mischung gemäß Beispiel 1 angefertigt, jedoch gelangte statt Methylcellulose 0,4 Vol.-% Gelatine zum Einsatz.

Das Frischrohgewicht betrug 1.980 kg/m³ und der Luftporengehalt lag bei 5,4 Vol.-%. Zur Konsistenz ist auszuführen, dass das Ausbreitmaß gemäß ÖNORM B3303 nach 10 Minuten 77 cm und nach 60 Minuten 72 cm betragen hat. Das Fließmaß gemäß Beispiel 1 betrug nach 10 Minuten 65 cm und nach 60 Minuten 50 cm. Die Druckfestigkeit betrug 3,4 N/mm², geprüft an einem Probekörper mit 100 mm Durchmesser und Höhe, nach 28 Tagen Lagerung unter Wasser bei Raumtemperatur.

Die Mischung wurde analog zu Beispiel 1 in den Strömungskanal eingebracht und denselben Bedingungen unterworfen. Nach 24 Stunden Lagerung im Strömungskanal waren nur geringste Spuren eines Abtrages an der Oberfläche erkennbar.

### Vergleichsbeispiel 10:

Es wurde analog zu Beispiel 9 verfahren, wobei die Mischung keine Gelatine enthalten hat.

Das Frischrohgewicht betrug 2.093 kg/m³ und der Luftporengehalt lag bei 3,6 Vol.-%. Zur Konsistenz ist auszuführen, dass das Ausbreitmaß gemäß ÖNORM B3303 nach 10 Minuten 75 cm und nach 60 Minuten 70 cm betragen hat. Das Fließmaß gemäß SCC Richtlinie des Österreichischen Betonvereins betrug nach 10 Minuten 63 cm und nach 60 Minuten 58 cm Die Druckfestigkeit betrug 4,5 N/mm², geprüft an einem Probekörper mit 100 mm Durchmesser und Höhe, nach 28 Tagen Lagerung unter Wasser bei Raumtemperatur.

Die Mischung wurde analog zu Beispiel 1 in den Strömungskanal eingebracht und denselben Bedingungen unterworfen. Nach 24 Stunden Lagerung im Strömungskanal waren 3 % der Höhe beschädigt.

Die erstarrten Mischungen der Beispiele und Vergleichsbeispiele 1 bis 8 wurden normal zum Untergrund geschnitten. Im oberen Drittel der Proben mit Mittel für die Thixotropie war lediglich eine Abnahme von maximal 10 % der Füllstoffe, bezogen auf die Schnittfläche gegenüber der restlichen Fläche, zu ermitteln, wohingegen bei Proben ohne Mittel für die Thixotropie eine Abnahme von ungefähr 30 % ermittelt wurde. Eine in ein unten geschlossenes Rohr eingefüllte Mischung gemäß der Beispiele setzte sich bis zum Erhärten maximal um 1 % der Höhe ab. Die Mischungen der Vergleichsbeispiele setzten sich jedoch mindest 2,5 % ab.

Die Mischung wird über ein Rohr, das kurz über dem Untergrund endigt, eingebracht, so dass aufgrund der hohen Dichte der erfindungsgemäßen Mischung ein Schlamm unterwandert und eine besonders günstige Verfüllung der Hohlräume erreicht werden kann.

Weist die Mischung ein Ausbreitmaß, beispielsweise unter 40,0 cm gemäß ÖNORM B3303 auf, so kann ein Pfropfen zur Abschottung von einzelnen Verfüllabschnitten besonders vorteilhaft gefertigt werden, wobei auch unter Wasser der kleinste Abböschungswinkel von 40° mit der Flanke des Pfropfens eingehalten werden kann.

Als Füllstoffe können Baurestmassen, Ziegel, Ziegelmehl, Kohlenstaub, Schlacken, lehmige Sande od. dgl. eingesetzt werden. Als hydraulische Bindemittel können neben Zement auch hydraulischer Kalk und/oder mit Puzzolanen zum Einsatz kommen.

## Patentansprüche

1. Fließfähige selbsterhärtende Mischung mit einem Füllstoff, insbesondere Zuschlag, von 10,0 Vol.-% bis 90,0 Vol.-%, insbesondere von 55,0 Vol.-% bis 80,0 Vol.-%, in einer Korngröße von 0 mm bis 30 mm, insbesondere 0 mm bis 8 mm, Puzzolanen und/oder zumindest einem hydraulischen Bindemittel, insbesondere Portlandzement, Wasser, mit einem W/B-Wert von 1,0 bis 5,0, Luftporen, insbesondere bis zu 6 Vol.-%, Zusatzmittel, z. B. Fließmittel, mit einer Dichte über 1,7, insbesondere über 1,9, und einer Druckfestigkeit nach ÖNORM B3303 nach 28 Tagen von 0,2 N/mm²bis 4,9 N/mm², **dadurch gekennzeichnet, dass** das Zusatzmittel zumindest ein Mittel für die, insbesondere zur Erhöhung der, Thixotropie von 0,05 Vol.-% bis 15,0 Vol.-%, insbesondere von 0,1 Vol.-% bis 2,0 Vol.-%, bezogen auf die Mischung, und gegebenenfalls Polypropylenfasern, aufweist, und unter fließendem Grundwasser ohne, z. B. mechanischen, Mischvorgang bereits eine Formbeständigkeit vor dem Erhärten aufweist, und die erhärtende Mischung eine Druckfestigkeit von 0,2 N/mm²bis 4,9 N/mm² nach 28-tägiger Lagerung unter Wasser bei Raumtemperatur aufweist.

2. Fließfähige selbsterhärtende Mischung nach Anspruch 1, **dadurch gekennzeichnet, dass** das Mittel für die Thixotropie Polysaccharide, insbesondere Guaran, aufweist.

3. Fließfähige selbsterhärtende Mischung nach Anspruch 1 oder 2, **dadurch gekennzeichnet, dass** das Mittel für die Thixotropie Gelatine in feinteiliger Form aufweist.

4. Fließfähige selbsterhärtende Mischung nach Anspruch 1, 2 oder 3, **dadurch gekennzeichnet, dass** das Mittel für die Thixotropie Celluloseether und/oder modifizierte Celluloseether, insbesondere Methylcellulose, z. B. auch kombiniert mit Polycarboxylaten, aufweist.

5. Fließfähige selbsterhärtende Mischung nach einem der Ansprüche 1 bis 4, **dadurch gekennzeichnet, dass** das Mittel für die Thixotropie Quelltone, insbesondere Bentonite, aufweist.

6. Fließfähige selbsterhärtende Mischung nach einem der Ansprüche 1 bis 5, **dadurch gekennzeichnet, dass** das Mittel für die Thixotropie Polycarboxylate aufweist.

7. Fließfähige selbsterhärtende Mischung nach einem der Ansprüche 1 bis 6, **dadurch gekennzeichnet, dass** die Zusatzmittel von 0,05 Vol.-% bis 15,0 Vol.-% in der Mischung vorliegen.

8. Verwendung einer fließfähigen selbsterhärtenden Mischung, insbesondere nach einem der Ansprüche 1 bis 7, mit einem Füllstoff, insbesondere Zuschlag, von 10,0 Vol.-% bis 90,0 Vol.-%, insbesondere von 55,0 Vol.-% bis 80,0 Vol.-%, in einer Korngröße von 0 mm bis 30 mm, insbesondere 0 mm bis 8 mm, Puzzolanen und/oder zumindest einem hydraulischen Bindemittel, insbesondere Portlandzement, Wasser, mit einem W/B-Wert von 1,0 bis 5,0, Luftporen, insbesondere bis zu 6 Vol.-%, Zusatzmittel, z. B. Fließmittel, mit einer Dichte über 1,7, insbesondere über 1,9, und einer Druckfestigkeit nach ÖNORM B3303 nach 28 Tagen Lagerung von 0,2 N/mm² bis 4,9 N/mm², wobei das Zusatzmittel zumindest ein Mittel für die, insbesondere zur Erhöhung der, Thixotropie von 0,05 Vol.-% bis 15,0 Vol.-%, insbesondere von 0,1 Vol.-% bis 2,0 Vol.-%, bezogen auf die Mischung, und gegebenenfalls Polypropylenfasern, aufweist, und unter fließendem Grundwasser ohne, z. B. mechanischen, Mischvorgang bereits im Wesentlichen eine Formbeständigkeit vor dem Erhärten aufweist, und die erhärtende Mischung 28 Tage nach Beginn der Erhärtung eine Druckfestigkeit von 0,2 N/mm² bis 4,9 N/mm² und gleichzeitiger 28-tägiger Lagerung unter Wasser bei Raumtemperatur aufweist zum Verfüllen von flüssiges Wasser und/oder wässrige Schlämme aufweisenden natürlichen und/oder künstlichen Hohlräumen.

9. Verwendung einer steifplastischen selbsterhärtenden Mischung nach Anspruch 8 zur Abschottung von flüssiges Wasser und/oder wässrige Schlämme aufweisenden natürlichen und/oder künstlichen Hohlräumen.

10. Verwendung einer fließfähigen selbsterhärtenden Mischung nach Anspruch 8 oder 9, wobei zum Mischen und/oder Transport der fließfähigen selbsterhärtenden Mischung Geräte der Transportbetonindustrie, z. B. Transportbetonmischanlage, Fahrmischer, Betonpumpen, eingesetzt werden.
